# EUROPEAN PATENT SPECIFICATION

(11) **EP 2 815 932 B1**
(45) Date of publication and mention of the grant of the patent: **10.04.2019**
(21) Application number: 13305827.1
(22) Date of filing: 19.06.2013
(51) Int. Cl.: B60S 1/38, B60S 1/40

(54) **Wiper blade for cleaning vehicle windows, wiper arm for a wiper blade and wiper device**
Wischerblatt zum Reinigen von Fahrzeugscheiben, Wischerarm für ein Wischerblatt und Wischervorrichtung
Raclette d'essuie-glace servant à nettoyer des vitres de véhicule, bras d'essuie-glace pour balai d'essuie-glace et dispositif d'essuie-glace

(43) Date of publication of application: 24.12.2014
(73) Proprietor: Valeo Systèmes d'Essuyage, 78322 Le Mesnil Saint Denis (FR)
(72) Inventor: Schaeuble, Michael, 71665 VAIHINGEN/ENZ (DE); Grasso, Giuseppe, 63340 Le Breuil sur Couze (FR)
(74) Representative: Callu-Danseux, Violaine

(56) References cited:
- DE-A1-102009 048 212
- DE-A1-102010 062 940
- DE-A1-102012 100 879

## Description

The invention relates to a wiper blade for cleaning vehicle windows according to the preamble of Claim 1. The invention also relates to a wiper arm for use with a wiper blade according to the invention and a wiper device.

A wiper blade according to the preamble of Claim 1 is already known from practice and comprises a wiper blade adapter for fastening the wiper blade to a wiper arm. The wiper blade also comprises a device for supplying washing liquid to the wiper blade body of the wiper blade, the device being arranged inside the wiper blade adapter.

The wiper arms used with such a known wiper blade are arranged above the wiper blade, in alignment with the wiper blade longitudinal axis. The wiper arms thereby have a relatively large distance from the vehicle window. A wiper device consisting of a wiper blade and a wiper arm is furthermore usually covered, at least in some regions, by a body part of the motor vehicle, in particular the bonnet, when the wiper blade is in the rest position. Owing to the described geometrical configuration and arrangement of the wiper blade and the wiper arm, relatively large openings are produced between the vehicle window and the body part (bonnet) covering the wiper blade. Overall, the arrangement and geometry of the bonnet can only be varied within relatively narrow limits by the wiper device.

Document DE 10 2009 048 212 A1 discloses a wiper blade according to the preamble of claim 1.

### DISCLOSURE OF THE INVENTION

Proceeding from the described prior art, the invention is based on the object of developing a wiper blade according to the preamble of Claim 1 in such a manner that it is suitable for allowing a particularly space-saving and variable arrangement on a wiper arm, so that the wiper device overall can be easily adapted to different geometrical arrangements of bonnets and vehicle windows. This object is achieved according to the invention in a wiper blade having the features of Claim 1 in that the second adapter element of the wiper blade adapter has a first section, on which the second adapter elements is connected to the first adapter element, and a second section, on which the second adapter element can be connected to the wiper arm, the two sections of the second adapter element being arranged at an oblique angle to each other.

Advantageous developments of the wiper blade according to the invention are specified in the subclaims.

In order to have low production costs it is advantageous if the second adapter element is cast in one piece, preferably out of plastic.

In a first design configuration, it is proposed for the two sections of the second adapter element to be arranged in a plane parallel to each other (when the wiper blade body is in the operating position) and for the angle between the two sections preferably to be between 10° and 45°. Such an arrangement makes it possible to arrange the wiper arm parallel to the wiper blade in the region of the wiper blade.

In an alternative arrangement, it is conceivable for the two sections of the second adapter element to be arranged at an oblique angle to each other when the wiper blade body is in the operating position in such a manner that the second section is directed towards the vehicle window. Such an arrangement makes it possible to arrange the wiper arm parallel to the wiper blade at a relatively small distance from the vehicle window in the region of the wiper blade.

Another advantageous design is provided if the wiper blade adapter has a first device for supplying washing liquid to the wiper blade adapter, which comprises a washing liquid connecting piece which is arranged on the wiper blade adapter.

Preferably the washing liquid connecting piece is connected to a flexible hose inside the second adapter element.

Another advantageous embodiment is provided if the washing liquid connecting piece on the side of the second section which faces away from the first section projects beyond the end face of the second section.

In order to avoid any step or gap between the wiper arm and the wiper blade in the connection section it is advantageous if first section of the second adapter element has a width which is substantially equal to the width of the fastening region at the wiper arm and that the second section of the second adapter element, which is adapted to be received in the fastening region of the wiper arm has a width which is smaller than the width of the first section.

The invention therefore also comprises a wiper arm for use with a wiper blade according to the invention, the wiper arm having a second device for supplying the washing liquid. According to the invention, it is provided for the wiper arm to have a first section with the fastening region and a second section, for the two sections to be arranged at an oblique angle to each other and for the angle preferably to be between 10° and 45°. An oblique angle within the meaning of the application means the corresponding angle on the wiper blade adapter.

Preferably, within the second section means for supplying washing fluid to the wiper blade are located, especially in form of a tube for the washing fluid.

A design configuration of the second device for supplying the washing liquid in which it comprises a linking element which is fastened in the wiper arm by means of a form-fitting connection and is designed to be connected to the water supply connecting piece in the wiper blade is particularly preferred.

To compensate component tolerances, it is furthermore advantageous if the adapter element is arranged on the wiper arm with play. This allows simple mounting of the wiper blade on the wiper arm despite the usual manufacturing tolerances.

Especially, the play allows a movement of the linking element about a rotary axis and/or a linear movement.

To achieve pre-centring of the adapter elements in the wiper arm so that the washing liquid connecting piece can be connected to the adapter element without any problems, it is proposed to provide at least one stop element which acts to limit the play to be formed on the adapter element and for the at least one stop element to interact with the wiper arm.

A further preferred embodiment is characterised in that the linking element has a free space for receiving a locking device of the wiper blade adapter.

Additionally it is preferred if the locking device is configurated as a detent connection.

Finally, the invention comprises a wiper device, which consists of a wiper blade according to the invention and a wiper arm which interacts with the wiper blade according to the invention. Such a wiper device is characterised in that the second section on the second adapter element of the wiper blade and the second section of the wiper arm are each arranged at least approximately at the same angle to the first section on the second adapter element and to the first section on the wiper arm respectively, so that the wiper blade body of the wiper blade and the second section of the wiper arm are arranged at least approximately parallel to each other. At least approximately parallel means in this case the operating position of the wiper device in which the wiper blade body rests on the vehicle window.

Further advantages, features and details of the invention can be found in the description of preferred exemplary embodiments below and in the drawing.

In the figures,
Fig. 1 shows the components of a wiper device according to the invention in a perspective diagram,
Fig. 2 shows the wiper device according to Fig. 1 in a plan view,
Fig. 3 shows the wiper device according to Fig. 1, in which the wiper blade is mounted on the wiper arm, in a perspective diagram,
Fig. 4 shows a cross section through a wiper arm in the region of an adapter element,
Fig. 5 shows the adapter element as is used in Fig. 4 in a perspective detail diagram,
Fig. 6 shows an adapter element which is modified with respect to Fig. 5, likewise in a perspective diagram,
Fig. 7 and Fig. 8 each show modified adapter elements in the installed state on the wiper arm, and
Fig. 9 and Fig. 10 show differently designed adapter elements and wiper arms to illustrate possible types of play of the adapter element in the wiper arm.

Identical elements or elements having the same function are provided with the same reference numbers in the figures.

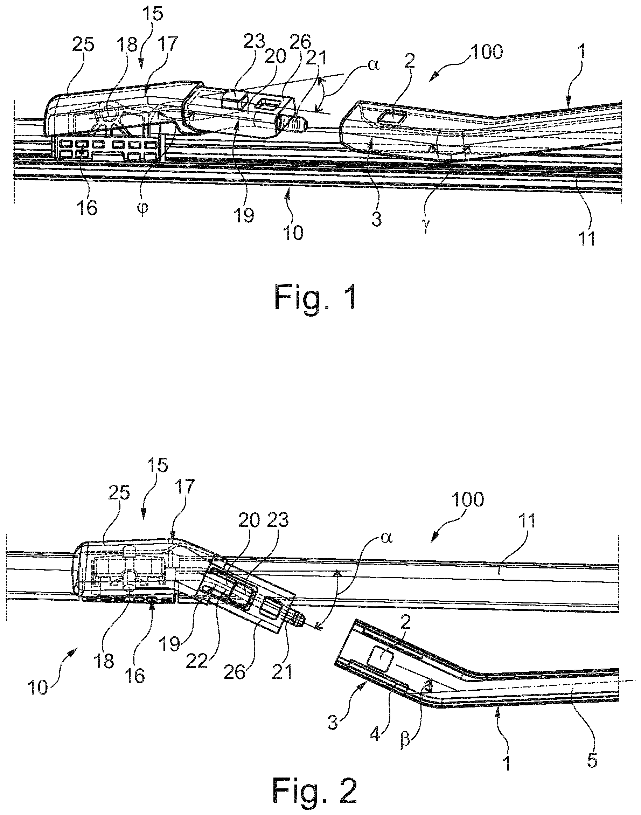

Fig. 1 and 2 show a wiper device 100 for cleaning a vehicle window (not shown). The wiper device 100 comprises a wiper arm 1, to which a wiper blade 10 according to the invention is fastened in a replaceable manner. The wiper blade 10 has, as is known per se, a wiper blade body 11 having spray openings (not shown in the figures) for applying a washing liquid to the vehicle window. The wiper blade body 11 is connected to a wiper blade adapter 15 which consists of plastic and is formed as an injection-moulded part. The wiper blade adapter 15 consists of a first, wiper-blade-side adapter element 16, which is connected to the wiper blade body 11, and a second adapter element 17, which can be connected to the wiper arm 1, the two adapter elements 16, 17 being arranged such that they can pivot with respect to each other in an axis 18. A first device 19 for supplying the washing liquid is arranged inside the second adapter element 17. The first device 19 comprises a flexible washing liquid hose 20, which is connected to a washing liquid connecting piece 21, which projects out of the end face, which faces the wiper arm 1, of the second adapter element 17. Furthermore, the second adapter element 17 has a locking device having a resilient tongue 22 with a locking head 23, which acts to form a locking connection with the wiper arm 1 in the operating position of the wiper blade 10, in which the wiper blade 10 is fastened to the wiper arm 1 and engages in a form-fitting manner in a receiving opening 2 which is formed as a through-hole on the wiper arm 1.

The second adapter element 17 has two sections 25, 26 which are connected integrally to each other. The first section 25 acts to fasten the second adapter element 17 to the first adapter element 16. The second section 26 acts to fasten the wiper blade adapter 15 to the wiper arm 1, to which end the wiper arm 1 has a fastening region 3 of substantially U-shaped cross section. As can be seen best in Fig. 1 and 2 together, the two sections 25, 26 of the second adapter element 17 are arranged at an oblique angle α, which is preferably approximately 10° to 40°, to each other. As can be seen in particular in Fig. 1, the angle α relates to a plane which runs parallel to the plane of the wiper blade body 11 when in its operating position in which the wiper blade body 11 rests against the vehicle window.

It should also be mentioned that it can also be provided for the second section 26 not only to be arranged obliquely to the first section 25 at an angle α which runs in a plane parallel to the wiper blade body 11, but also to be angled downwards in the direction of the wiper blade body 11, so that the second section 26 is directed in the direction of the vehicle window (not shown).

Additionally it is mentioned that it can also be foreseen that the second section 26 is arranged to the first section 25 not only under an angular angle α, which is located in a parallel plane with respect to the blade body 11, but additionally also under an angle ϕ in the direction to the blade body 11, so that the first section 25 targets to a not shown window shield.

As can be seen in particular in Fig. 1 and 2, the wiper arm 1 also has two regions 4, 5 which are arranged at an oblique angle β to each other, the two angles α, β preferably being the same size. In the operating state of the wiper blade 10 on the wiper arm 1, this achieves an arrangement in which the second region 5 of the wiper arm 1 is aligned at least substantially parallel to the wiper blade adapter 15 and to the wiper blade 10. Furthermore it is also preferable that the two regions 4, 5 are located in a common plane, that means that the angle □ is 180°.

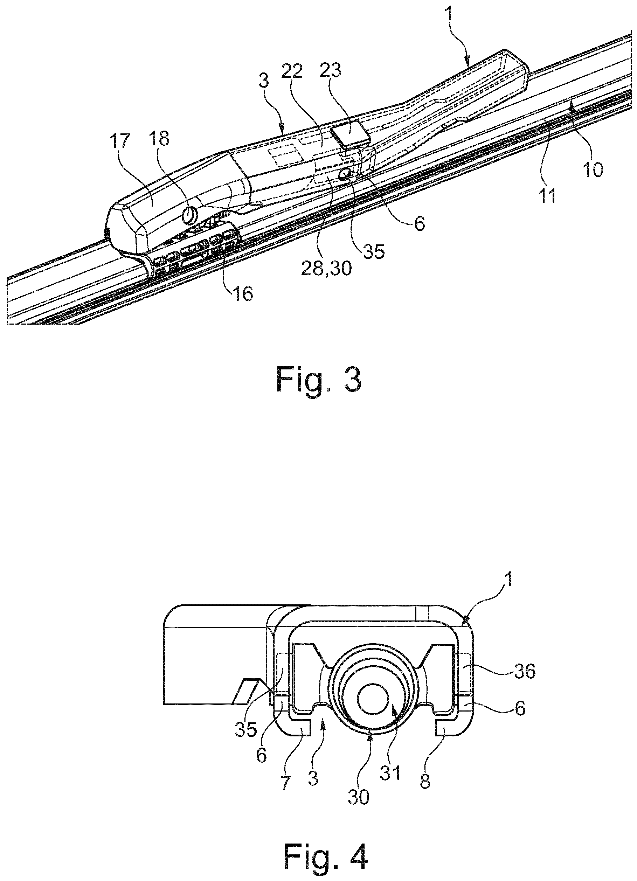

A second device 28 for supplying the washing liquid to the wiper blade adapter 15 in the form of a connection element 30, which is produced in one piece from plastic as an injection-moulded part, is arranged with play inside the fastening region 3 of the wiper arm 1. As can be seen best in Fig. 3 to 5 together, the connection element 30 has a receptacle 31 for the washing liquid connecting piece 21 on the side facing the wiper blade adapter 15 such that the washing liquid connecting piece 21 can be introduced into the receptacle 31 of the connection element 30. On the side facing away from the wiper blade adapter 15, the connection element 30 has a further washing liquid connecting piece 32, which is connected to a supply line (not shown) in the form of a (flexible) hose, which is arranged inside the wiper arm 1 and which is coupled to the washing liquid pump in the engine compartment of the motor vehicle.

The connection element 30 is fastened to the wiper arm 1 by means of a form-fitting connection. To this end, the connection element 30 has on side arms 33, 34 on each opposite side a peg-shaped fastening projection 35, 36, which each have a round cross section in the exemplary embodiment shown in Fig. 3 to 5. The fastening projections 35, 36 engage in receptacles or holes 6 formed in the fastening region 3 on the side walls of the wiper arm 1. Owing to the cylindrical shape of the fastening projections 35, 36, the adapter element 30 is arranged inside the holes 6 such that it can pivot at least in the axis of the fastening projections 35, 36. To limit the pivot angle, the connection element 30 has studs 37 on the underside of the side arms 33, 34, which interact with inwardly bent retaining sections 7, 8 of the wiper arm 1 to limit the pivot angle in accordance with Fig. 4.

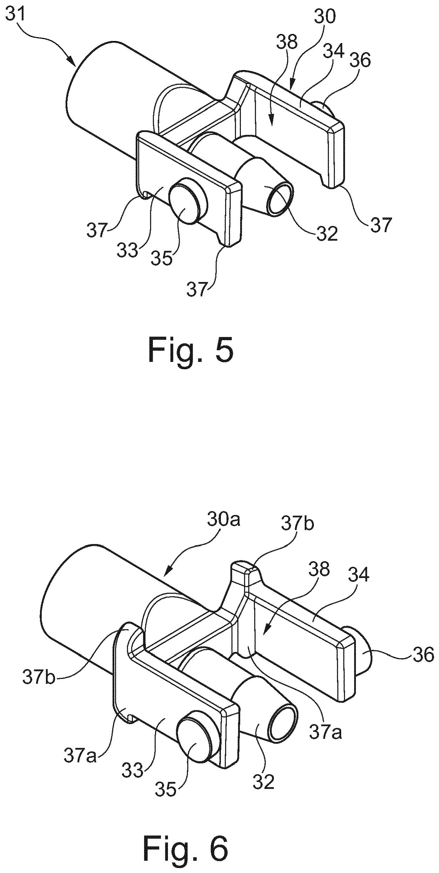

Fig. 6 shows a connection element 30a, which differs from the connection element 30 of Fig. 5 in that studs 37a, 37b are only arranged on one side of the side arms 33, 34, but both on the top side and the underside.

Both the connection element 30 and the adapter element 30a have a free space 38 between the two side arms 33, 34, in the region of which the resilient tongue 22 and the locking head 23 are arranged with play, as can be seen in particular in Fig. 3.

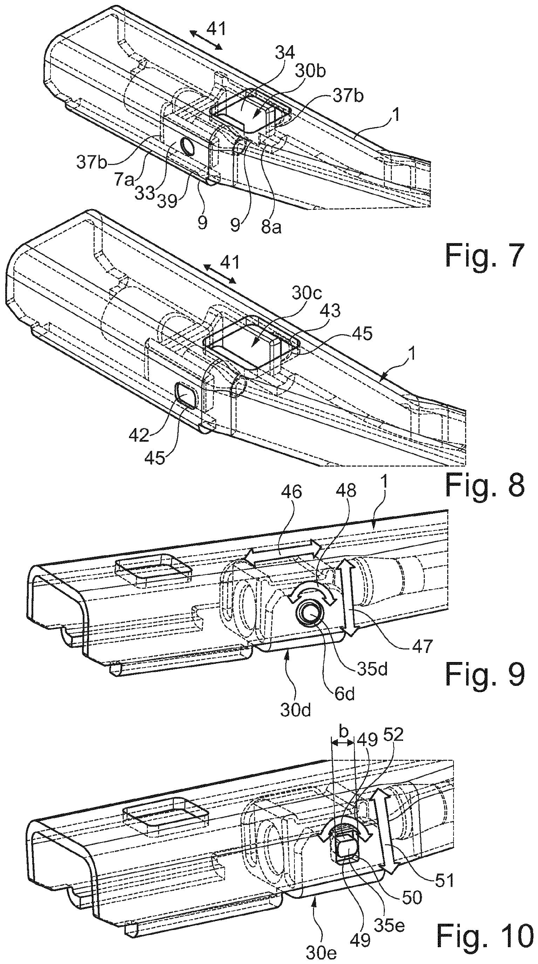

The adapter connection 30b of Fig. 7 differs from the connection elements 30, 30a in that the form-fitting connection between the connection element 30b and the wiper arm 1 takes place by means of projections 39, which are formed on the underside of the side arms 33, 34, project outwards and project into recesses 9 formed in the retaining regions 7a, 8a of the wiper arm 1, the length of the recess 9 in the wiper arm longitudinal axis being greater than the corresponding length or width of the projection 39, so the connection element 30b is arranged such that it can move in the wiper arm 1 in the direction of the double arrow 41. A movement of the connection element 30b in a direction perpendicular to the double arrow 41 is prevented by studs 37b which are formed on the underside of the side arms 33, 34 and rest against the top side of the retaining regions 7a, 8a.

In the connection element 30c of Fig. 8, it is provided for the mobility in the direction of the double arrow 41 to be made possible by projections 42, 43 which engage in through-openings 45 in the wiper arm 1. The projections 42, 43 each have a rectangular central region with rounded edges.

In the connection element 30d shown in Fig. 9, the diameter of the fastening projections 35d is smaller than the diameter of the holes 6d in the wiper arm 1. A mobility of the connection element 30d in the direction of the double arrows 46, 47 and a pivotability in the direction of the rotary arrow 48 is achieved thereby.

Finally, Fig. 10 shows a connection element 30e, the fastening projections 35e of which are provided with flattened portions 49 arranged on opposite sides. The fastening projections 35e engage in rectangular through-holes 50 in the wiper arm 1, the width b of the through-holes 50 corresponding to the diameter of the fastening projections 35e. A mobility of the adapter element 30e in the direction of the double arrow 51 and in the direction of the rotary arrow 52 is achieved thereby.

### LIST OF REFERENCE SYMBOLS

- 1: Wiper arm
- 2: Receiving opening
- 3: Fastening region
- 4: Region
- 5: Region
- 6, 6d: Hole
- 7, 7a: Retaining section
- 8, 8a: Retaining section
- 9: Recess
- 10: Wiper blade
- 11: Wiper blade body
- 15: Wiper blade adapter
- 16: First adapter element
- 17: Second adapter element
- 18: Axis
- 19: First device
- 20: Washing liquid hose
- 21: Washing liquid connecting piece
- 22: Resilient tongue
- 23: Locking head
- 25: First section
- 26: Second section
- 28: Second device
- 30, 30a-30e: Connection element
- 31: Receptacle
- 32: Washing liquid connecting piece
- 33: Side arm
- 34: Side arm
- 35, 35e: Fastening projection
- 36: Fastening projection
- 37, 37a, 37b: Stud
- 38: Free space
- 39: Projection
- 41: Double arrow
- 42: Projection
- 43: Projection
- 45: Through-opening
- 46: Double arrow
- 47: Double arrow
- 48: Rotary arrow
- 49: Flattened portion
- 50: Through-hole
- 51: Double arrow
- 52: Rotary arrow

- 100: Wiper device

- α: Angle
- β: Angle
- ϕ: Angle
- □: Angle

- b: Width

## Claims

1. A wiper blade (10) for cleaning a vehicle window, having a wiper blade body (11), which is connected to a wiper blade adapter (15) for fastening the wiper blade (10) to a wiper arm (1), wherein the wiper blade adapter (15) includes a first adapter element (16), which is connected to the wiper blade body (11), and a second adapter element (17) for fastening the wiper blade adapter (15) to a fastening region (3) of the wiper arm (1), wherein the two adapter elements (16, 17) are arranged such that they can pivot with respect to each other around an axis (18),
**characterised in that**
the second adapter element (17) has a first section (25), on which the second adapter element (17) is connected to the first adapter element (16), and a second section (26), on which the second adapter element (17) can be connected to the wiper arm (1), wherein both sections (25, 26) of the second adapter element (17) are arranged at an oblique angle (α) to each other.

2. The wiper blade according to Claim 1,
**characterised in that**
that second adapter element (17) is cast in one piece, preferably out of plastic.

3. The wiper blade according to Claim 1 or 2,
**characterised in that**
the two sections (25, 26) of the second adapter element (17) are arranged in a plane parallel to each other and that the angle (α) between the two sections (25, 26) is preferably between 10° and 45°.

4. The wiper blade according to Claim 1 or 2,
**characterised in that**
the two sections (25, 26) of the second adapter element (17) are arranged at an oblique angle (α) to each other when the wiper blade body (11) is in the operating position in such a manner that the second section (26) is directed towards the vehicle window.

5. The wiper blade according to one of Claims 1 to 4,
**characterised in that**
the wiper blade adapter (15) has a first device (19) for supplying washing liquid to the wiper blade adapter (15), which comprises a washing liquid connecting piece (21) which is arranged on the wiper blade adapter (15).

6. The wiper blade according to Claim 5,
**characterised in that**
that the washing liquid connecting piece (21) is connected to a flexible hose (20) inside the second adapter element (17).

7. The wiper blade according to one of Claims 1 to 6,
**characterised in that**
the washing liquid connecting piece (21) on the side of the second section (26) which faces away from the first section (25) projects beyond the end face of the second section (26).

8. The wiper blade according to one of Claims 1 to 7,
**characterised in that**
said first section (25) of the second adapter element (17) has a width which is substantially equal to the width of the fastening region (3) at the wiper arm (1) and that the second section (26) of the second adapter element (17), which is adapted to be received in the fastening region (3) of the wiper arm (1) has a width which is smaller than the width of the first section (25) .

9. A wiper arm (1), configured for use with a wiper blade (10) according to one of Claims 1 to 8, having a fastening region (3) for receiving a wiper blade adapter (15) and a second device (28) for supplying washing liquid to the wiper blade (10),
**characterised in that**
the wiper arm (1) has a first section (4) with the fastening region (3) and a second section (5), that the two sections (4, 5) are arranged at an oblique angle (β) to each other, and that the angle (β) is preferably between 10° and 45°.

10. The wiper arm according to Claim 9,
**characterised in that**
within the second section (5) means for supplying washing fluid to the wiper blade (10) are located, preferable in form of a tube for the washing fluid.

11. The wiper arm according to Claim 9 or 10,
**characterised in that**
the second device (28) comprises an linking element (30; 30a to 30e), which is fastened in the wiper arm (1) by means of a form-fitting connection and is designed to be connected to the washing liquid connecting piece (21) in the wiper blade (10).

12. The wiper arm according to Claim 11,
**characterised in that**
the linking element (30; 30a to 30e) is arranged on the wiper arm (1) with play.

13. The wiper arm according to Claim 12,
**characterised in that**
the play allows a movement of the linking element (30; 30a to 30e) about a rotary axis and/or a linear movement.

14. The wiper arm according to one of Claims 9 to 13,
**characterised in that**
at least one stop element (37; 37a; 37b) which acts to limit the play is formed on the linking element (30; 30a to 30e), and that the at least one stop element (37; 37a; 37b) interacts with the wiper arm (1).

15. The wiper arm according to one of Claims 11 to 14,
**characterised in that**
the linking element (30; 30a to 30e) has a free space (38) for receiving a locking device of the wiper blade adapter (15).

16. The wiper arm according to Claim 15,
**characterised in that**
said locking device is configurated as a detent connection (22, 23).

17. A wiper device (100), comprising a wiper blade (10) according to one of Claims 1 to 8 and a wiper arm (1) according to one of Claims 9 to 16,
**characterised in that**
the second section (26) on the second adapter element (17) of the wiper blade (10) and the second section (5) of the wiper arm (1) are each arranged at least approximately at the same angle (α, β) to the first section (25) on the second adapter element (17) and to the first section (4) on the wiper arm (1) respectively, so that the wiper blade body (11) of the wiper blade (10) and the second section (5) of the wiper arm (1) are arranged at least approximately parallel to each other.

## Patentansprüche

1. Wischerblatt (10) zum Reinigen einer Fahrzeugscheibe, das einen Wischerblattkörper (11) aufweist, der mit einem Wischerblattadapter (15) verbunden ist, um das Wischerblatt (10) an einem Wischerarm (1) zu befestigen, wobei der Wischerblattadapter (15) ein erstes Adapterelement (16) beinhaltet, das mit dem Wischerblattkörper (11) verbunden ist, und ein zweites Adapterelement (17) zum Befestigen des Wischerblattadapters (15) an einer Befestigungsregion (3) des Wischerarms (1), wobei die zwei Adapterelemente (16, 17) so angeordnet sind, dass sie in Bezug zueinander um eine Achse (18) gedreht werden können,
**dadurch gekennzeichnet, dass**
das zweite Adapterelement (17) einen ersten Abschnitt (25) aufweist, an dem das zweite Adapterelement (17) mit dem ersten Adapterelement (16) verbunden ist, und einen zweiten Abschnitt (26), an dem das zweite Adapterelement (17) mit dem Wischerarm (1) verbunden werden kann, wobei beide Abschnitte (25, 26) des zweiten Adapterelements (17) in einem schrägen Winkel (α) zueinander angeordnet sind.

2. Wischerblatt nach Anspruch 1,
**dadurch gekennzeichnet, dass**
das zweite Adapterelement (17) in einem Stück gegossen ist, vorzugsweise aus Kunststoff.

3. Wischerblatt nach Anspruch 1 oder 2,
**dadurch gekennzeichnet, dass**
die zwei Abschnitte (25, 26) des zweiten Adapterelements (17) in einer Ebene parallel zueinander angeordnet sind, und dass der Winkel (α) zwischen den zwei Abschnitten (25, 26) vorzugsweise zwischen 10° und 45° groß ist.

4. Wischerblatt nach Anspruch 1 oder 2,
**dadurch gekennzeichnet, dass**
die zwei Abschnitte (25, 26) des zweiten Adapterelements (17) in einem schrägen Winkel (α) zueinander angeordnet sind, wenn sich der Wischerblattkörper (11) in einer solchen Weise in der Betriebsposition befindet, dass der zweite Abschnitt (26) auf die Fahrzeugscheibe gerichtet ist.

5. Wischerblatt nach einem der Ansprüche 1 bis 4,
**dadurch gekennzeichnet, dass**
der Wischerblattadapter (15) eine erste Vorrichtung (19) zum Zuführen von Waschflüssigkeit zu dem Wischerblattadapter (15) aufweist, die ein Waschflüssigkeits-Anschlussstück (21) umfasst, das an dem Wischerblattadapter (15) angeordnet ist.

6. Wischerblatt nach Anspruch 5,
**dadurch gekennzeichnet, dass**
das Waschflüssigkeits-Anschlussstück (21) an einen flexiblen Schlauch (20) innerhalb des zweiten Adapterelements (17) angeschlossen ist.

7. Wischerblatt nach einem der Ansprüche 1 bis 6,
**dadurch gekennzeichnet, dass**
das Waschflüssigkeits-Anschlussstück (21) auf der Seite des zweiten Abschnitts (26), der dem ersten Abschnitt (25) abgewandt ist, über die Abschlussfläche des zweiten Abschnitts (26) hinaus vorsteht.

8. Wischerblatt nach einem der Ansprüche 1 bis 7,
**dadurch gekennzeichnet, dass**
der erste Abschnitt (25) des zweiten Adapterelements (17) eine Breite aufweist, die der Breite der befestigenden Region (3) an dem Wischerarm (1) im Wesentlichen gleicht, und dass der zweite Abschnitt (26) des zweiten Adapterelements (17), das dazu ausgelegt ist, in der befestigenden Region (3) des Wischerarms (1) aufgenommen zu werden, eine Breite aufweist, die kleiner als die Breite des ersten Abschnitts (25) ist.

9. Wischerarm (1), der für eine Verwendung mit einem Wischerblatt (10) nach einem der Ansprüche 1 bis 8 ausgelegt ist, und eine befestigende Region (3) zum Aufnehmen eines Wischerblattadapters (15) und eine zweite Vorrichtung (28) zum Zuführen von Waschflüssigkeit zu dem Wischerblatt (10) aufweist,
**dadurch gekennzeichnet, dass**
der Wischerarm (1) einen ersten Abschnitt (4) mit der befestigenden Region (3) und einen zweiten Abschnitt (5) aufweist, die zwei Abschnitte (4, 5) in einem schrägen Winkel (β) zueinander angeordnet sind, und dass der Winkel (β) vorzugsweise zwischen 10° und 45° groß ist.

10. Wischerarm nach Anspruch 9,
**dadurch gekennzeichnet, dass**
innerhalb des zweiten Abschnitts (5) Mittel zum Zuführen von Waschflüssigkeit zu dem Wischerblatt (10) angeordnet sind, vorzugsweise in Form eines Rohrs für die Waschflüssigkeit.

11. Wischerarm nach Anspruch 9 oder 10,
**dadurch gekennzeichnet, dass**
die zweite Vorrichtung (28) ein Verbindungselement (30; 30a bis 30e) umfasst, das in dem Wischerarm (1) mittels einer formschlüssigen Verbindung befestigt und dazu ausgelegt ist, an das Waschflüssigkeits-Anschlussstück (21) in dem Wischerblatt (10) angeschlossen zu werden.

12. Wischerarm nach Anspruch 11,
**dadurch gekennzeichnet, dass**
das Verbindungselement (30; 30a bis 30e) an dem Wischerarm (1) mit Spiel angeordnet ist.

13. Wischerarm nach Anspruch 12,
**dadurch gekennzeichnet, dass**
das Spiel eine Bewegung des Verbindungselements (30; 30a bis 30e) um eine Drehachse und/oder eine lineare Bewegung gestattet.

14. Wischerarm nach einem der Ansprüche 9 bis 13,
**dadurch gekennzeichnet, dass**
mindestens ein Anschlagelement (37; 37a; 37b), das zum Begrenzen des Spiels fungiert, an dem Verbindungselement (30; 30a bis 30e) ausgebildet ist, und dass das mindestens ein Anschlagelement (37; 37a; 37b) mit dem Wischerarm (1) interagiert.

15. Wischerarm nach einem der Ansprüche 11 bis 14,
**dadurch gekennzeichnet, dass**
das Verbindungselement (30; 30a bis 30e) einen freien Raum (38) zum Aufnehmen einer Sperrvorrichtung des Wischerblattadapters (15) aufweist.

16. Wischerarm nach Anspruch 15,
**dadurch gekennzeichnet, dass**
die Sperrvorrichtung als eine Rastverbindung (22, 23) ausgelegt ist.

17. Wischervorrichtung (100), die ein Wischerblatt (10) nach einem der Ansprüche 1 bis 8 und einen Wischerarm (1) nach einem der Ansprüche 9 bis 16 umfasst,
**dadurch gekennzeichnet, dass**
der zweite Abschnitt (26) an dem zweiten Adapterelement (17) des Wischerblattes (10) und der zweite Abschnitt (5) des Wischerarms (1) mindestens annähernd in demselben Winkel (α, β) zu dem ersten Abschnitt (25) an dem zweiten Adapterelement (17) bzw. zu dem ersten Abschnitt (4) an dem Wischerarm (1) angeordnet sind, sodass der Wischerblattkörper (11) des Wischerblattes (10) und der zweite Abschnitt (5) des Wischerarms (1) mindestens annähernd parallel zueinander angeordnet sind.

## Revendications

1. Balai d'essuie-glace (10) pour nettoyer une fenêtre d'un véhicule, ayant un corps de balai d'essuie-glace (11) qui est raccordé à un adaptateur de balai d'essuie-glace (15) pour attacher le balai d'essuie-glace (10) à un bras d'essuie-glace (1), l'adaptateur de balai d'essuie-glace (15) comportant un premier élément d'adaptateur (16) qui est raccordé au corps de balai d'essuie-glace (11) et un deuxième élément d'adaptateur (17) pour attacher l'adaptateur de balai d'essuie-glace (15) à une région de fixation (3) du bras d'essuie-glace (1), les deux éléments d'adaptateur (16, 17) étant disposés de manière à pouvoir pivoter l'un par rapport à l'autre autour d'un axe (18),
**caractérisé en ce que**
le deuxième élément d'adaptateur (17) présente une première section (25) sur laquelle le deuxième élément d'adaptateur (17) est raccordé au premier élément d'adaptateur (16), et une deuxième section (26) sur laquelle le deuxième élément d'adaptateur (17) peut être raccordé au bras d'essuie-glace (1), les deux sections (25, 26) du deuxième élément d'adaptateur (17) étant disposées suivant un angle oblique (α) l'une par rapport à l'autre.

2. Balai d'essuie-glace selon la revendication 1,
**caractérisé en ce que**
le deuxième élément d'adaptateur (17) est coulé d'une seule pièce, de préférence en plastique.

3. Balai d'essuie-glace selon la revendication 1 ou 2,
**caractérisé en ce que**
les deux sections (25, 26) du deuxième élément d'adaptateur (17) sont disposées dans un plan parallèlement l'une à l'autre et **en ce que** l'angle (α) entre les deux sections (25, 26) est de préférence compris entre 10° et 45°.

4. Balai d'essuie-glace selon la revendication 1 ou 2,
**caractérisé en ce que**
les deux sections (25, 26) du deuxième élément d'adaptateur (17) sont disposées suivant un angle oblique (α) l'une par rapport à l'autre lorsque le corps de balai d'essuie-glace (11) est dans la position de fonctionnement de telle sorte que la deuxième section (26) soit dirigée vers la fenêtre du véhicule.

5. Balai d'essuie-glace selon l'une des revendications 1 à 4,
**caractérisé en ce que**
l'adaptateur de balai d'essuie-glace (15) présente un premier dispositif (19) pour fournir du liquide de lavage à l'adaptateur de balai d'essuie-glace (15), qui comprend une pièce de connexion de liquide de lavage (21) qui est disposée sur l'adaptateur de balai d'essuie-glace (15).

6. Balai d'essuie-glace selon la revendication 5,
**caractérisé en ce que**
la pièce de connexion de liquide de lavage (21) est raccordée à un tuyau flexible (20) à l'intérieur du deuxième élément d'adaptateur (17).

7. Balai d'essuie-glace selon l'une des revendications 1 à 6,
**caractérisé en ce que**
la pièce de connexion de liquide de lavage (21) du côté de la deuxième section (26) qui est tourné à l'opposé de la première section (25) fait saillie au-delà de la face d'extrémité de la deuxième section (26) .

8. Balai d'essuie-glace selon l'une des revendications 1 à 7,
**caractérisé en ce que**
ladite première section (25) du deuxième élément d'adaptateur (17) présente une largeur qui est sensiblement égale à la largeur de la région de fixation (3) au niveau du bras d'essuie-glace (1) et **en ce que** la deuxième section (26) du deuxième élément d'adaptateur (17), qui est prévue pour être reçue dans la région de fixation (3) du bras d'essuie-glace (1), présente une largeur qui est inférieure à la largeur de la première section (25).

9. Bras d'essuie-glace (1), configuré pour être utilisé avec un balai d'essuie-glace (10) selon l'une des revendications 1 à 8, ayant une région de fixation (3) pour recevoir un adaptateur de balai d'essuie-glace (15) et un deuxième dispositif (28) pour fournir du liquide de lavage au balai d'essuie-glace (10),
**caractérisé en ce que**
le bras d'essuie-glace (1) présente une première section (4) avec la région de fixation (3) et une deuxième section (5), **en ce que** les deux sections (4, 5) sont disposées suivant un angle oblique (β) l'une par rapport à l'autre, et **en ce que** l'angle (β) et de préférence compris entre 10° et 45°.

10. Bras d'essuie-glace selon la revendication 9,
**caractérisé en ce que**
des moyens pour fournir du liquide de lavage au balai d'essuie-glace (10) sont situés à l'intérieur de la deuxième section (5), de préférence sous la forme d'un tube pour le fluide de lavage.

11. Bras d'essuie-glace selon la revendication 9 ou 10,
**caractérisé en ce que**
le deuxième dispositif (28) comprend un élément de liaison (30 ; 30a à 30e) qui est fixé dans le bras d'essuie-glace (1) au moyen d'une connexion par engagement par correspondance de formes et qui est conçu pour être raccordé à la pièce de connexion de liquide de lavage (21) dans le balai d'essuie-glace (10) .

12. Bras d'essuie-glace selon la revendication 11,
**caractérisé en ce que**
l'élément de liaison (30 ; 30a à 30e) est disposé sur le bras d'essuie-glace (1) avec jeu.

13. Balai d'essuie-glace selon la revendication 12,
**caractérisé en ce que**
le jeu permet un mouvement de l'élément de liaison (30 ; 30a à 30e) autour d'un axe de rotation et/ou permet un mouvement linéaire.

14. Bras d'essuie-glace selon l'une des revendications 9 à 13,
**caractérisé en ce**
**qu'**au moins un élément de butée (37 ; 37a ; 37b) qui sert à limiter le jeu est formé sur l'élément de liaison (30 ; 30a à 30e), et **en ce que** l'au moins un élément de butée (37 ; 37a ; 37b) coopère avec le bras d'essuie-glace (1).

15. Bras d'essuie-glace selon l'une des revendications 11 à 14,
**caractérisé en ce que**
l'élément de liaison (30 ; 30a à 30e) présente un espace libre (38) pour recevoir un dispositif de verrouillage de l'adaptateur de balai d'essuie-glace (15).

16. Bras d'essuie-glace selon la revendication 15,
**caractérisé en ce que**
ledit dispositif de verrouillage est configuré sous forme de connexion à cliquet (22, 23).

17. Dispositif d'essuie-glace (100) comprenant un balai d'essuie-glace (10) selon l'une des revendications 1 à 8 et un bras d'essuie-glace (1) selon l'une des revendications 9 à 16,
**caractérisé en ce que**
la deuxième section (26) sur le deuxième élément d'adaptateur (17) du balai d'essuie-glace (10) et la deuxième section (5) du bras d'essuie-glace (1) sont chacune disposées au moins approximativement suivant le même angle (α, β) par rapport à la première section (25) sur le deuxième élément d'adaptateur (17) et par rapport à la première section (4) sur le bras d'essuie-glace (1), respectivement, de sorte que le corps de balai d'essuie-glace (11) du balai d'essuie-glace (10) et la deuxième section (5) du bras d'essuie-glace (1) soient disposés au moins approximativement parallèlement l'un à l'autre.
